# EUROPÄISCHE PATENTSCHRIFT

(11) **EP 0 905 355 B1**
(45) Veröffentlichungstag und Bekanntmachung des Hinweises auf die Patenterteilung: **22.03.2006**
(21) Anmeldenummer: 98113276.4
(22) Anmeldetag: 16.07.1998
(51) Int. Cl.: F01N 3/20

(54) **Abgasanlage für einen Verbrennungsmotor**
Exhaust apparatus for an internal combustion engine
Dispositif d'échappement pour un moteur à combustion interne

(30) Priorität: 27.09.1997 DE 19742762
(43) Veröffentlichungstag der Anmeldung: 31.03.1999
(73) Patentinhaber: Ford Global Technologies, LLC, Dearborn, MI 48126 (US)
(72) Erfinder: Grieser, Klemens, 40764 Langenfeld (DE); Himmelsbach, Johann, Dr., 51789 Lindlar (DE)
(74) Vertreter: Drömer, Hans-Carsten

(56) Entgegenhaltungen:
- DE-A- 4 218 834
- DE-U- 9 204 220
- US-A- 3 972 685
- US-A- 4 023 360
- US-A- 5 307 628
- US-A- 5 396 764

## Beschreibung

Die Erfindung betrifft eine Abgasanlage für einen Verbrennungsmotor mit einer Abgasbehandlungsanordnung und einer im Abgasweg zwischen Verbrennungsmotor und Abgasbehandlungsanordnung angeordneten Temperatursteuereinrichtung zum selektiven Führen der Abgase über Abgasführungswege mit unterschiedlichen Abgaswärmeverlusten, gemäss Anspruch 1, erster Teil, gemäss DE-U-92 04 220.

Bei der Abgasbehandlungsanordnung kann es sich z.B. um einen Dreiwegekatalysator oder um einen Dreiwegekatalysator mit einer zusätzlichen Stickoxidfalle zur Abgasreinigung insbesondere im Magerbetrieb des Verbrennungsmotors handeln. Im Hinblick auf eine optimale Abgasreinigung ist es erforderlich, die Abgasbehandlungsanordnung in einem vorbestimmten Temperaturbereich zu betreiben. Die Temperatur der Abgasbehandlungsanordnung wird durch die Temperatur des diese durchströmenden Abgases beeinflußt. Zu niedrige oder zu hohe Abgastemperaturen führen zu unvollständiger Abgasreinigung; zu hohe Abgastemperaturen können außerdem zu einer Beschädigung bzw. vorzeitigen Alterung der Abgasbehandlungsanordnung führen. Da die Abgastemperatur am Verbrennungsmotor - abhängig vom Betriebszustand des Motors - in einem Bereich von etwa 200 bis 1000°C variiert, sind verschiedene Lösungsansätze bekannt, die Temperatur des in den Katalysator strömenden Abgases zu beeinflussen. Neben motorinternen Maßnahmen zur Beeinflussung der Abgastemperatur (z.B. künstlicher Überfettung des Luft-/Kraftstoffgemisches) sind hierzu Temperatursteuereinrichtungen zum selektiven Führen der Abgase über Abgasführungswege mit unterschiedlichen Abgaswärmeverlusten bekannt.

Aus der DE 42 18 834 A1 ist eine Abgasanlage bekannt, bei der zwischen einem Katalysator und einem Verbrennungsmotor zwei unabhängig geführte Abgasleitungen unterschiedlichen Querschnitts vorgesehen sind. In der Abgasleitung mit größerem Querschnitt strömen die Abgase langsamer als in der Abgasleitung mit kleinerem Querschnitt, wodurch größere Wärmeverluste entstehen. Diese Abgasleitung kann mit einer Klappe abgesperrt werden. Bei offener Klappe fließt das Abgas bevorzugt durch die Leitung mit größerem Querschnitt. Bei geschlossener Klappe fließt der Abgasstrom ausschließlich durch das Abgasrohr mit kleinerem Querschnitt, in dem aufgrund der schnelleren Strömung geringere Wärmeverluste auftreten. Die aus diesem Dokument bekannte Einrichtung zur Abgastemperatursteuerung weist wegen der auf einem längeren Abschnitt parallel zu führenden doppelten Abgasleitungen ein großes Konstruktionsvolumen auf, das bei vielen Fahrzeugen nur mit Schwierigkeiten unterzubringen ist.

Aus der EP 0 355 489 A1 und der WO 92/18755 sind Abgasanlagen bekannt, bei denen ein in Motornähe vor dem Hauptkatalysator im Abgasweg angeordneter Start-Katalysator, der ein schnelles Einsetzen der Abgasreinigung nach dem Motorstart gewährleisten soll, durch Bypassleitungen vor Überhitzung geschützt wird. Bei den aus diesen Schriften bekannten Abgasanlagen ist jedoch keine Temperaturregelung des Hauptkatalysators vorgesehen.

Der Erfindung liegt die Aufgabe zugrunde, eine möglichst kompakte und robuste Abgasanlage der eingangs genannten Art zu schaffen, die eine effektive Abgastemperaturbeeinflussung ermöglicht.

Diese Aufgabe wird erfindungsgemäß gelöst, mit den Merkmalen nach Anspruch 1.

Ist eine Abkühlung des Abgases erwünscht, wird der Abgasstrom durch den inneren Abgasführungsweg mittels des Steuerelements reduziert, so daß das Abgas zwangsweise verstärkt durch den äußeren Abgasführungsweg fließt und somit abgekühlt wird. Ohne Reduktion des Abgasstroms durch den inneren Abgasführungsweg fließen die Abgase aufgrund des geringeren Strömungswiderstandes bevorzugt durch den inneren Abgasführungsweg, wo sie geringeren Wärmeverlusten ausgesetzt sind.

In vorteilhafter Ausgestaltung der Erfindung kann vorgesehen sein, daß das Steuerelement als im abstromseitigen Endbereich des inneren Abgasführungsweges angeordnete Abgasklappe ausgebildet ist. Die Anordnung der Abgasklappe im Endbereich hat den besonderen Vorteil, daß die Klappe vor hohen Abgastemperaturen geschützt ist, da diese bei hohen Temperaturen geschlossen wird und den inneren Abgasführungsweg stillegt. Dadurch werden Korrosionsprobleme an der Abgasklappe vermieden.

Weiterhin kann in vorteilhafter Weise im inneren Abgasführungsweg ein Start-Katalysator angeordnet sein. Ein derartiger - gegenüber dem Hauptkatalysator vorzugsweise kleinerer - Start-Katalysator kann nahe am Motor angeordnet werden und wird aufgrund der dort vorliegenden höheren Abgastemperatur und der geringeren Wärmekapazität schneller aufgeheizt, so daß die Abgasreinigung nach einem Kaltstart des Motors rascher einsetzt (Verbesserung des sog. Anspringverhaltens). Bei höheren Abgastemperaturen wird die Abgasklappe geschlossen, so daß der Start-Katalysator vor Überhitzung geschützt ist. Aber auch ohne einen zusätzlichen Start-Katalysator wird das Anspringverhalten der erfindungsgemäßen Abgasanlage gegenüber dem Stand der Technik verbessert. Die Abgasbehandlungsanordnung kann nämlich näher am Motor angeordnet werden, wobei durch die Temperatursteuerungseinrichtung eine Überhitzung z.B. bei Vollastbetrieb des Motors verhindert wird. Dadurch, daß die Abgasbehandlungsanordnung näher am Motor angeordnet werden kann, ohne eine Überhitzung zu riskieren, ist das Anspringverhalten nach einem Kaltstart deutlich verbessert.

In weiterer Ausgestaltung der Erfindung kann vorgesehen sein, daß im äußeren Abgasführungsweg Kühlelemente vorgesehen sind, die vom Abgas umströmt werden und in thermischem Kontakt mit der Außenwand der Temperatursteuereinrichtung stehen. Bei den Kühlelementen kann es sich z.B. um eine wabenförmige Katalysatorträgerstruktur handeln, die mit der Außenwand in thermischem Kontakt steht oder um eine oder mehrere metallische Lochblenden od. dgl.. Die Kühlelemente haben zum einen die Aufgabe, eine ausreichende Wärmeabfuhr zu gewährleisten, und zum anderen die Aufgabe, den Strömungswiderstand im äußeren Abgasführungsweg zu erhöhen, damit der Abgasstrom bei offener Abgasklappe hauptsächlich durch den inneren Abgasführungsweg fließt. Der innere Abgasführungsweg steht dagegen nicht direkt mit der Außenwand in thermischer Verbindung, so daß auf diesem eine wesentlich schlechtere Wärmeabfuhr gegeben ist. Außerdem ist die Strömungsgeschwindigkeit im inneren Abgasführungsweg größer, was ebenfalls eine geringere Abgasabkühlung bewirkt.

Die an die Außenwand der Temperatursteuereinrichtung abgegebene Wärme kann durch an der Außenseite der Temperatursteuereinrichtung ausgebildete Kühlrippen an die Umgebungsluft abgegeben werden. Vorzugsweise wird die Temperatursteuereinrichtung so angeordnet, daß eine zusätzliche Kühlung durch den Fahrtwind erfolgt. Infolge der daraus resultierenden effektiven Abführung der Abgaswärme kann die erfindungsgemäße Temperatursteuereinrichtung gegenüber bekannten Vorrichtungen erheblich kompakter gestaltet werden.

Weiterhin kann in zweckmäßiger Weise vorgesehen sein, daß die Temperatursteuereinrichtung mit der Abgasbehandlungsanordnung integral in einem Gehäuse angeordnet ist. Auf diese Weise wird eine besonders kompakte Einheit geschaffen.

Weiterhin kann vorgesehen sein, daß die Abgasklappe von einem Stellglied bewegt wird, das von einer elektronischen Motorsteuerung in Abhängigkeit von der in räumlicher Nähe der Abgasbehandlungsanordnung gemessenen Temperatur in eine Öffnungs- oder eine Schließstellung gebracht wird. Bei Überschreiten einer bestimmten Abgasgrenztemperatur wird die Abgasklappe geschlossen, bei deren Unterschreiten geöffnet.

Alternativ zu einer derartigen zweipunktregelung kann auch eine kontinuierliche Regelung der Abgasklappenstellung vorgesehen sein.

Die Erfindung wird nachfolgend anhand der Zeichnungen beispielhaft näher erläutert. Es zeigen:
- Fig. 1: eine stark schematisierte Ansicht einer erfindungsgemäßen Abgasanlage und
- Fig. 2: eine schematische Querschnittsdarstellung der Temperatursteuereinrichtung entlang der Schnittlinie A - A in Fig. 1.

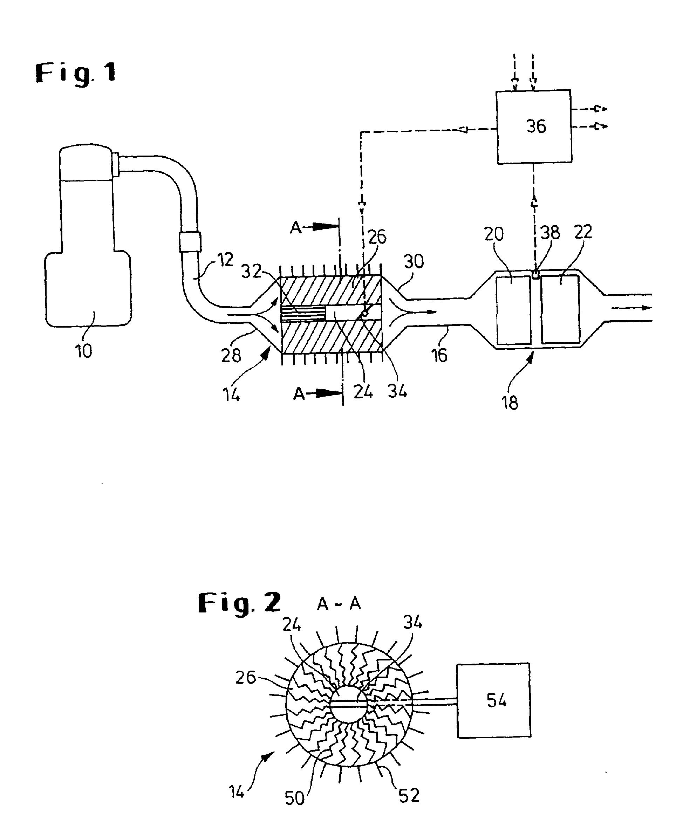

Gemäß Fig. 1 werden die Abgase eines Verbrennungsmotors 10 über eine Abgasleitung 12 einer insgesamt mit 14 bezeichneten Temperatursteuereinrichtung zugeführt. Über eine weitere Abgasleitung 16 gelangen die Abgase in eine insgesamt mit 18 bezeichnete Abgasbehandlungsanordnung, die in einem gemeinsamen Gehäuse eine Stickoxidfalle 20 und einen Hauptkatalysator 22 enthält. Nach der Reinigung werden die Abgase einer nicht dargestellten Auspuffanlage zugeführt. Die Temperatursteuereinrichtung 14 weist einen inneren Abgasführungsweg 24 und einen äußeren Abgasführungsweg 26 auf, die mittels zweier konzentrisch ineinanderliegender Rohre etwa gleicher Länge realisiert werden. An den Stirnenden des äußeren Rohres befinden sich Stutzen 28, 30, die die beiden Abgasführungswege jeweils wieder zu einem einzigen Abgasrohr 12 bzw. 16 vereinigen. Im Anfangsbereich (jeweils auf die Strömungsrichtung bezogen) des inneren Abgasführungsweges ist ein Start-Katalysator 32 angeordnet. Im Endbereich kann der innere Abgasführungsweg mittels einer Abgasklappe 34 verschlossen werden. Die Abgasklappe 34 wird über ein Stellglied (z.B. einen Unterdrucksteller) von einer elektronischen Motorsteuerung 36 angesteuert, die neben anderen Eingangssignalen ein Temperatursignal eines der Abgasbehandlungsanordnung 18 zugeordneten Temperatursensors 38 erhält. Die Motorsteuerung 36 regelt die Temperatur der Abgasbehandlungsanordnung 18, indem die Abgasklappe 34 bei Überschreiten einer vorgegebenen Grenztemperatur vollständig geschlossen und bei Unterschreiten einer vorgegebenen Grenztemperatur vollständig geöffnet wird. Der jeweilige Solltemperaturbereich richtet sich nach dem Betriebsmodus des Motors: Im Magerbetrieb des Verbrennungsmotors ist dies der optimale Betriebstemperaturbereich der Stickoxidfalle 20; im stöchiometrischen bzw. fetten Motorbetrieb der optimale Betriebstemperaturbereich des Dreiwegekatalysators 22. Bei Vorliegen bestimmter Motorbetriebszustände können auch besondere Steuerungsstrategien verwendet werden. Beispielsweise kann während der Anspringphase vorgesehen sein, daß die Abgasklappe 34 für eine vorgegebene Zeit - unabhängig vom Meßwert des Temperatursensors 38 - geöffnet bleibt, um ein schnelles Anspringen des Hauptkatalysators 22 bzw. der Stickoxidfalle 20 zu gewährleisten.

In Fig. 2 ist die Temperatursteuereinrichtung 14 im Querschnitt dargestellt. Im äußeren Abgasführungsweg 26 befinden sich gewellte Metallbleche, die zum einen die Abgaswärme zur Außenwand der Temperatursteuereinrichtung 14 abführen, zum anderen den Strömungswiderstand gegenüber dem inneren Abgasführungsweg 24 erhöhen und außerdem das innere Rohr abstützen. Zur Abführung der an die Außenwand abgegebenen Wärme sind auf deren Außenseite Kühlrippen 52 vorgesehen. Die in Fig. 2 in der Öffnungsstellung dargestellte Abgasklappe 34 wird über ein Unterdruckstellglied 54 über eine durch den äußeren Abgasführungsweg ragende Welle bewegt.

## Patentansprüche

1. Abgasanlage für einen Verbrennungsmotor (10) mit einer Abgasbehandlungsanordnung (18) und einer im Abgasweg zwischen Verbrennungsmotor und Abgasbehandlungsanordnung angeordneten Temperatursteuereinrichtung (14) zum selektiven Führen der Abgase über Abgasführungswege mit unterschiedlichen Abgaswärmeverlusten, wobei die Temperatursteuereinrichtung (14) einen äußeren (26) und einen inneren (24) Abgasführungsweg, der vom äußeren Abgasführungsweg umgeben ist, aufweist, wobei sich äußerer und innerer Abgasführungsweg im zu- und abstromseitigen Endbereich (28, 30) der Temperatursteuereinrichtung zu jeweils einem gemeinsamen Abgasführungsweg (12, 16) vereinigen, wobei der innere Abgasführungsweg (24) ein Steuerelement (34) zum selektiven Steuern des Abgasstroms durch diesen Abgasführungsweg aufweist, **dadurch gekennzeichnet, daß** der äußere Abgasführungsweg (26) Mittel (50) aufweist, durch die im Vergleich zum inneren Abgasführungsweg (24) eine größere Abgast-Wärmeabfuhr und ein größerer Strömungswiderstand für das durchströmende Abgas entsteht.

2. Abgasanlage nach Anspruch 1, **dadurch gekennzeichnet, daß** das Steuerelement als im abstromseitigen Endbereich des inneren Abgasführungsweges (24) angeordnete Abgasklappe (34) ausgebildet ist.

3. Abgasanlage nach Anspruch 1 oder 2, **dadurch gekennzeichnet, daß** im inneren Abgasführungsweg (24) ein Start-Katalysator (32) angeordnet ist.

4. Abgasanlage nach einem der Ansprüche 1 bis 3, **dadurch gekennzeichnet, daß** im äußeren Abgasführungsweg (26) Kühlelemente (50) vorgesehen sind, die vom Abgas umströmt werden und in thermischem Kontakt mit der Außenwand der Temperatursteuereinrichtung (14) stehen.

5. Abgasanlage nach einem der Ansprüche 1 bis 4, **dadurch gekennzeichnet, daß** an der Außenseite der Temperatursteuereinrichtung (14) Kühlrippen (52) ausgebildet sind.

6. Abgasanlage nach einem der Ansprüche 1 bis 5, **dadurch gekennzeichnet, daß** die Temperatursteuereinrichtung (14) mit der Abgasbehandlungsanordnung (18) integral in einem Gehäuse angeordnet ist.

7. Abgasanlage nach einem der Ansprüche 2 bis 6, **dadurch gekennzeichnet, daß** die Abgasklappe (34) von einem Stellglied (54) bewegt wird, das von einer elektronischen Motorsteuerung (36) in Abhängigkeit von der in räumlicher Nähe der Abgasbehandlungsanordnung gemessenen Temperatur in eine Öffnungs- oder eine Schließstellung gebracht wird.

8. Abgasanlage nach einem der Ansprüche 2 bis 6, **dadurch gekennzeichnet, daß** die Abgasklappe (34) von einem Stellglied (54) bewegt wird, das von einer elektronischen Motorsteuerung (36) in Abhängigkeit von der in räumlicher Nähe der Abgasbehandlungsanordnung gemessenen Temperatur kontinuierlich zwischen einer Öffnungs- und einer Schließstellung bewegt wird.

## Claims

1. Exhaust system for an internal combustion engine (10) having an exhaust-gas treatment arrangement (18) and a temperature-control device (14), arranged in the exhaust-gas path between internal combustion engine and exhaust-gas treatment arrangement, for selectively routing the exhaust gases via exhaust-gas routing paths with different exhaust-gas heat losses, the temperature-control device (14) having an outer exhaust-gas routing path (26) and an inner exhaust-gas routing path (24), which is surrounded by the outer exhaust-gas routing path, the outer and inner exhaust-gas routing paths being combined in the inflow-side and outflow-side end regions (28, 30) of the temperature-control device to form in each case a common exhaust-gas routing path (12, 16), the inner exhaust-gas routing path (24) having a control element (34) for selectively controlling the exhaust-gas stream passing through this exhaust-gas routing path, **characterized in that** the outer exhaust-gas routing path (26) has means (50) which give rise to a greater exhaust-gas heat dissipation and a greater flow resistance for the exhaust gas flowing through it compared to the inner exhaust-gas routing path (24).

2. Exhaust system according to Claim 1, **characterized in that** the control element is designed as an exhaust-gas flap (34) arranged in the outflow-side end region of the inner exhaust-gas routing path (24).

3. Exhaust system according to Claim 1 or 2, **characterized in that** a starting catalytic converter (32) is arranged in the inner exhaust-gas routing path (24).

4. Exhaust system according to one of Claims 1 to 3, **characterized in that** cooling elements (50), which have the exhaust gas flowing around them and are in thermal contact with the outer wall of the temperature-control device (14), are provided in the outer exhaust-gas routing path (26).

5. Exhaust system according to one of Claims 1 to 4, **characterized in that** cooling fins (52) are formed on the outer side of the temperature-control device (14).

6. Exhaust system according to one of Claims 1 to 5, **characterized in that** the temperature-control device (14) is arranged integrally with the exhaust-gas treatment arrangement (18) in one housing.

7. Exhaust system according to one of Claims 2 to 6, **characterized in that** the exhaust-gas flap (34) is moved by an actuating element (54) which is moved into an open position or a closed position by an electronic engine controller (36) as a function of the temperature measured in the spatial vicinity of the exhaust-gas treatment arrangement.

8. Exhaust system according to one of Claims 2 to 6, **characterized in that** the exhaust-gas flap (34) is moved by an actuating element (54) which is moved continuously between an open position and a closed position by an electronic engine controller (36) as a function of the temperature measured in the spatial vicinity of the exhaust-gas treatment arrangement.

## Revendications

1. Installation d'échappement pour un moteur à combustion interne (10) comprenant un système de traitement des gaz d'échappement (18) et un dispositif de commande de température (14) disposé dans la trajectoire des gaz d'échappement entre le moteur à combustion interne et le système de traitement des gaz d'échappement pour le guidage sélectif des gaz d'échappement par des voies de guidage de gaz d'échappement avec différentes pertes de chaleur de gaz d'échappement, le dispositif de commande de température (14) présentant une voie de guidage de gaz d'échappement extérieure (26) et une voie de guidage de gaz d'échappement intérieure (24) qui est entourée par la voie de guidage de gaz d'échappement extérieure, la voie de guidage de gaz d'échappement extérieure et la voie de guidage de gaz d'échappement intérieure se réunissant dans la région d'extrémité (28, 30) du dispositif de commande de température du côté de l'afflux et de l'évacuation pour former à chaque fois une voie de guidage de gaz d'échappement commune (12, 16), la voie de guidage de gaz d'échappement intérieure (24) présentant un élément de commande (34) pour la commande sélective du flux de gaz d'échappement à travers cette voie de guidage de gaz d'échappement, **caractérisée en ce que** la voie de guidage de gaz d'échappement extérieure (26) présente des moyens (50) qui permettent de produire, par comparaison à la voie de guidage de gaz d'échappement intérieure (24), une plus grande dissipation de la chaleur des gaz d'échappement et une plus grande résistance à l'écoulement pour le gaz circulant.

2. Installation d'échappement selon la revendication 1, **caractérisée en ce que** l'élément de commande est réalisé sous forme de clapet de gaz d'échappement (34) disposé dans la région d'extrémité de la voie de guidage de gaz d'échappement (24) du côté de l'évacuation.

3. Installation d'échappement selon la revendication 1 ou 2, **caractérisée en ce qu'**un catalyseur de démarrage (32) est disposé dans la voie de guidage de gaz d'échappement intérieure (24).

4. Installation d'échappement selon l'une quelconque des revendications 1 à 3, **caractérisée en ce que** des éléments de refroidissement (50) sont prévus dans la voie de guidage de gaz d'échappement extérieure (26), lesquels sont parcourus par le gaz d'échappement et sont en contact thermique avec la paroi extérieure du dispositif de commande de température (14).

5. Installation d'échappement selon l'une quelconque des revendications 1 à 4, **caractérisée en ce que** des nervures de refroidissement (52) sont réalisées sur le côté extérieur du dispositif de commande de température (14).

6. Installation d'échappement selon l'une quelconque des revendications 1 à 5, **caractérisée en ce que** le dispositif de commande de température (14) est disposé avec le système de traitement des gaz d'échappement (18) intégralement dans un boîtier.

7. Installation d'échappement selon l'une quelconque des revendications 2 à 6, **caractérisée en ce que** le clapet de gaz d'échappement (34) est déplacé par un actionneur (54) qui est amené dans une position d'ouverture ou de fermeture par une commande de moteur électronique (36) en fonction de la température mesurée à proximité spatiale du système de traitement des gaz d'échappement.

8. Installation d'échappement selon l'une quelconque des revendications 2 à 6, **caractérisée en ce que** le clapet de gaz d'échappement (34) est déplacé par un actionneur (54) qui est déplacé en continu entre une position d'ouverture et de fermeture par une commande de moteur électronique (36) en fonction de la température mesurée à proximité spatiale du système de traitement des gaz d'échappement.
